# EUROPEAN PATENT SPECIFICATION

(11) **EP 4 119 279 B1**
(45) Date of publication and mention of the grant of the patent: **12.02.2025**
(21) Application number: 21768853.0
(22) Date of filing: 11.03.2021
(51) Int. Cl.: B23K 26/03, B23K 26/70, G01M 11/02, G01M 11/08

(54) **FAILURE DETECTION DEVICE AND LASER PROCESSING SYSTEM**
FEHLERERKENNUNGSVORRICHTUNG UND LASERBEARBEITUNGSSYSTEM
DISPOSITIF DE DÉTECTION DE DÉFAILLANCE ET SYSTÈME DE TRAITEMENT PAR LASER

(30) Priority: 13.03.2020 JP 2020043819
(43) Date of publication of application: 18.01.2023
(73) Proprietor: Panasonic Intellectual Property Management Co., Ltd., Osaka-shi, Osaka 540-6207 (JP)
(72) Inventor: ISHIKAWA, Ryo, Osaka-shi, Osaka 540-6207 (JP)
(74) Representative: Novagraaf International SA
(86) International application number: PCT/JP2021/009886
(87) International publication number: WO 2021/182582

(56) References cited:
- WO-A1-2019/059249
- WO-A1-2019/059249
- JP-A- 2015 513 069
- JP-A- H1 038 751
- US-A1- 2005 115 940
- US-A1- 2015 003 498

## Description

The present disclosure relates to a failure detection device according to the preamble of claim 1 (see for example WO 2019/059249 A1), and a laser processing system comprising such failure detection unit (see claim 10), and particularly relates to a failure detection device having an optical fiber for transmitting high-output processing laser light and a laser processing system.

### BACKGROUND ART

A laser processing system has been broadly used, which transmits high-output processing laser light from, e.g., a direct diode laser (DDL) light source to a processing head via an optical fiber, condense the processing laser light to a processing target (a workpiece), and irradiates the processing target with the processing laser light to, e.g., weld, fuse, or drill the processing target. If such an optical fiber is disconnected during transmission of the processing laser light, a peripheral device including a resin coating of the optical fiber might be damaged because the output energy of the processing laser light is high. For this reason, generally in the laser processing system utilizing the high-output processing laser light, a device that detects disconnection of the optical fiber for transmitting the laser light is provided.

Many devices for detecting disconnection of the optical fiber for transmitting the high-output laser light have been proposed so far. For example, a disconnection detection device according to the prior art has been proposed, which is configured such that a closed circuit is formed using coated electric wires arranged along an optical fiber for transmitting laser light and disconnection of the optical fiber is detected by electric detection of disconnection (open) or short-circuit (short) of the closed circuit due to heat generated upon disconnection of the optical fiber.

Another disconnection detection device has been also proposed, which is configured such that a tube for circulating gas is, instead of the coated electric wires, arranged along an optical fiber, the flow rate of circulating gas is monitored, and disconnection of the optical fiber is determined when the flow rate of circulating gas has changed.

Another disconnection detection device has been also utilized, which includes, in a laser processing system that transmits laser light (processing laser light) for processing a processing target via an optical fiber, a pair of light detectors that monitors the light intensity (the output intensity) of the processing laser light input to and output from the optical fiber and detects, based on a change in a difference in or a relative value of the light intensity of the processing laser light measured by each light detector, disconnection of the optical fiber or an energy loss in the optical fiber.

More specifically, an optical fiber breakage detection device described in Patent Document 1 includes an optical fiber for transmitting high-energy processing laser light for processing a processing target, a pair of photoreceivers in the vicinity of input and output ends of the optical fiber, and a detection unit that compares the outputs of these photoreceivers to detect breakage of the optical fiber.

Similarly, a laser transmission optical fiber device described in Patent Document 2 includes an optical fiber for transmitting power laser light for processing a processing target, a visible light selection reflection section arranged in the vicinity of an output end of the optical fiber, and a light detector arranged in the vicinity of an input end of the optical fiber to receive the power laser light and visible light selected by the visible light selection reflection section. Such visible light is generated due to combustion of a coating material of the optical fiber caused by, e.g., disconnection of the optical fiber. The laser transmission optical fiber device compares the light intensities of the power laser light and the visible light, thereby detecting an abnormality such as disconnection of the optical fiber.

### CITATION LIST

### PATENT DOCUMENT

PATENT DOCUMENT 1: Japanese Unexamined Patent Publication No. 10-038751
PATENT DOCUMENT 2: Japanese Unexamined Patent Publication No. 07-266067

### SUMMARY OF THE INVENTION

### TECHNICAL PROBLEM

However, in the disconnection detection device using the coated electric wires or the gas circulation tube, even if the optical fiber is not disconnected, when the closed circuit of the coated electric wires separated from the optical fiber is disconnected or short-circuited or the flow rate of circulating gas has changed, erroneous detection of disconnection of the optical fiber is caused in some cases. For example, in the disconnection detection device using the coated electric wires, when the pair of coated electric wires forming the closed circuit is detached due to friction with the optical fiber, a disconnection detection function is activated due to contact (short-circuit) of a pair of cores of the coated electric wires in some cases.

In any of the techniques described in Patent Document 1 and Patent Document 2, the high-output laser for processing the processing target is utilized for disconnection detection. Specifically, disconnection of the optical fiber is detected by comparison of the processing laser light input to and output from the optical fiber (Patent Document 1) or the power laser light input to the optical fiber and the visible light output from the optical fiber (Patent Document 2). However, the output intensity of the laser light (the processing laser light) for processing the processing target fluctuates due to, e.g., an operation state or a use time of a laser light source device, and the transmittance of the optical fiber is easily changeable. For this reason, it is difficult to detect, e.g., a transmission loss in the optical fiber by means of the optical fiber itself for transmitting the processing laser light, leading to, e.g., the probability of erroneous detection being caused.

The processing laser light (Patent Document 1) and the visible light (Patent Document 2) caused by combustion of the coating material generally have wide wavelength bands, and easily interfere with Rayleigh scattered light (scattered light caused by a light scattering phenomenon due to particles smaller than a light wavelength) caused in the optical fiber depending on these wavelengths and the composition (the density of glass molecules forming the optical fiber) of the optical fiber. For this reason, the processing laser light or the visible light is not stable, and similarly, erroneous detection etc. might be caused.

In the case of performing laser processing by means of the laser processing system having the optical fiber, Patent Documents 1 and 2 fail to specifically disclose a configuration capable of properly detecting a defect caused in the processing system including the optical fiber itself or the processing target.

### SOLUTION TO THE PROBLEM

According to a first aspect of the present invention, a failure detection device, is defined in claim 1, and the failure detection device includes a processing laser light source that emits processing laser light, a detection laser light source that emits detection laser light, an optical fiber that transmits second partial light of the detection laser light and the processing laser light and is provided with a mode stripper unit in the vicinity of an input end and another mode stripper unit in the vicinity of an output end, a condensing lens that condenses the second partial light and the processing laser light to the input end of the optical fiber, a second photoreceiver that is arranged in the vicinity of the condensing lens, a third photoreceiver that is arranged in the vicinity of the mode stripper unit and measures the intensity of light released from the mode stripper unit, a fourth photoreceiver that is arranged in the vicinity of the another mode stripper unit and measures the intensity of light released from the another mode stripper unit, a laser head that is connected to the output end of the optical fiber and emits the second partial light and the processing laser light to a processing target, a fifth photoreceiver that is arranged in the laser head, and a determination unit that determines, based on the relative ratio of each of the light intensities measured at least by the second to fifth photoreceivers and a temporal change in the light intensities, whether or not there is a defect in any of the optical fiber, the condensing lens, the laser head, and a processing target processing state.

According to a second aspect of the present invention, a laser processing system with such failure detection device is defined in claim 10.

Further preferred embodiments of the present invention are defined in the dependent claims.

### ADVANTAGES OF THE INVENTION

The failure detection device according to the present invention can detect optical fiber disconnection and other laser processing system defects with a high reliability.

### BRIEF DESCRIPTION OF THE DRAWINGS

[FIG. 1] FIG. 1 is a block diagram showing a schematic configuration of a failure detection device according to an embodiment.
[FIG. 2] FIG. 2 is a view showing schematic configurations of an optical fiber and connection portions thereof.
[FIG. 3] FIG. 3 is a schematic sectional view along an III-III line of FIG. 2.
[FIG. 4] FIG. 4 is a table showing a relationship among various defects in a laser processing system and the failure detection device, signs thereof, and measurement signals from first to fifth light detectors.
[FIG. 5] FIG. 5 is a table showing a relationship among various defects in the laser processing system and the failure detection device and the quality of processing of a processing target.
[FIG. 6] FIG. 6 is a block diagram showing a schematic configuration of a failure detection device according to a variation.
[FIG. 7] FIG. 7 is a table showing a relationship among various defects in a laser processing system and the failure detection device, signs thereof, and measurement signals from first to sixth light detectors.

### DESCRIPTION OF EMBODIMENTS

First, a schematic configuration of the present disclosure will be described. A failure detection device according to an aspect of the present disclosure includes a processing laser light source that emits processing laser light, a detection laser light source that emits detection laser light, a first photoreceiver that measures the intensity of first partial light of the detection laser light, an optical fiber that transmits second partial light of the detection laser light and the processing laser light and is provided with a mode stripper unit in the vicinity of an input end and another mode stripper unit in the vicinity of an output end, and a laser head that is connected to the output end of the optical fiber and emits the second partial light and the processing laser light to a processing target. The failure detection device further includes a condensing lens that condenses the second partial light and the processing laser light to the input end of the optical fiber, a second photoreceiver that is arranged in the vicinity of the condensing lens, a third photoreceiver that is arranged in the vicinity of the mode stripper unit, a fourth photoreceiver that is arranged in the vicinity of the another mode stripper unit, a fifth photoreceiver that is arranged in the laser head, and a determination unit that determines, based on the relative ratio of each of the light intensities measured at least by the second to fifth photoreceivers and a temporal change in the light intensities, whether or not there is a defect in any of the optical fiber, the condensing lens, the laser head, and a processing target processing state.

The failure detection device according to this aspect has the above-described configuration, and therefore, can properly determine the defect caused in the failure detection device and a laser processing system including the failure detection device or laser processing and the presence or absence and type of the sign of the defect. Moreover, maintenance can be performed for a defective location in the failure detection device or the laser processing system at a proper timing, and the laser processing system can be stopped in advance. Accordingly, the quality of processing of the processing target can be maintained.

Next, an embodiment of the failure detection device according to the present disclosure will be described below with reference to the attached drawings. In description of the embodiment, terms (e.g., a "left side" and a "right side") indicating directions are used as necessary for the sake of easy understanding of the description. However, these terms are for the description, and are not intended to limit the present disclosure. Note that in each drawing, electric connection of each component of the failure detection device is indicated by a solid line and the direction of each type of laser light from each component (e.g., a light source) is indicated by a straight arrow. The straight arrow in each drawing is shown with an optical axis shifted for clearly showing each type of laser light, but each type of laser light is actually transmitted on the same optical axis in the optical fiber.

### [Embodiment]

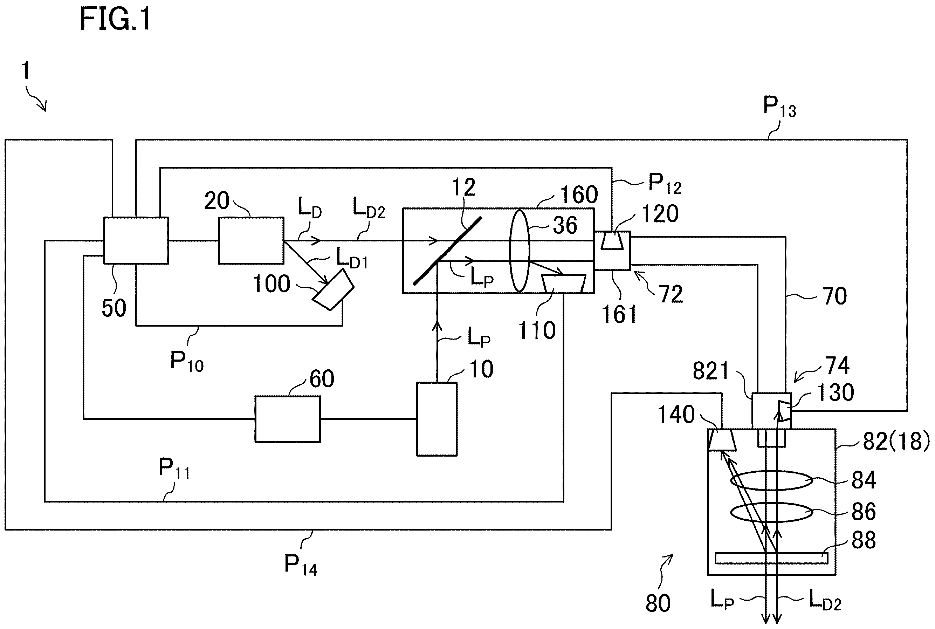

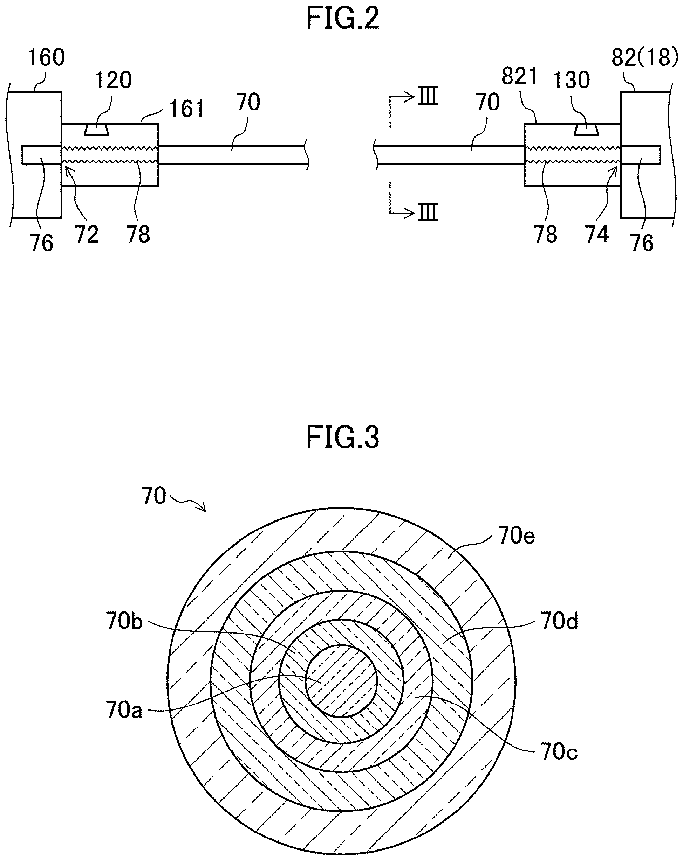

An embodiment of a failure detection device 1 according to the present disclosure will be described with reference to FIGS. 1 to 5. FIG. 1 is a block diagram showing a schematic configuration of the failure detection device 1 according to the present embodiment. FIG. 2 is a view showing schematic configurations of an optical fiber 70 and connection portions thereof. FIG. 3 is a schematic sectional view along an III-III line of FIG. 2.

As shown in FIG. 1, the failure detection device 1 according to the embodiment generally includes a processing laser light source 10, a detection laser light source 20, the optical fiber 70, first to fifth light detectors 100, 110, 120, 130, 140 (photoreceivers), a laser head 80, a first housing 160, and a defect determination unit (a determination unit) 50. A laser processing system according to the present embodiment has the failure detection device 1, a system control unit 60, a first housing chamber 16, and a second housing chamber 18. The first housing chamber 16 houses the processing laser light source 10, the detection laser light source 20, the first housing 160, the first light detector 100, and the defect determination unit 50. The first housing 160 houses a half mirror 12, a condensing lens 36, and the second light detector 110. The first housing 160 indirectly houses the third light detector 120.

Note that the phrase "indirectly houses" as described herein means that the third light detector 120 is arranged in a tubular connector portion 161 to which an end portion of the optical fiber 70 is attached, and thereafter, is indirectly attached to the first housing 160. In other words, such a phrase means a structure in which the third light detector 120 is built and arranged in the connector portion 161 at the end portion of the optical fiber 70 and the connector portion 161 for the optical fiber 70 is attached to the first housing 160.

The processing laser light source 10 emits optional high-output processing laser light L_{P} for processing a processing target (a workpiece, not shown). Processing includes, for example, welding, fusing, and drilling. The processing laser light source 10 may be, for example, a direct diode laser (DDL) light source that emits processing laser light L_{P} having a long peak wavelength, a wide wavelength band (975 nm ± 20 nm), and an output intensity of a several kW order (up to 10⁴ W). As shown in the figure, the processing laser light L_{P} is reflected by the half mirror 12 arranged at 45 degrees relative to the optical axis of the processing laser light L_{P}, and is oriented (guided) to the optical fiber 70. Preferably, the half mirror 12 substantially totally reflects the processing laser light L_{P} with the above-described wavelength band, and allows substantially total transmission of light with a shorter wavelength, such as later-described detection laser light L_{D}.

The detection laser light source 20 emits the detection laser light L_{D}. The detection laser light source 20 may be, for example, a helium neon (He-Ne) laser light source or a semiconductor laser light source that emits detection laser light L_{D} having a shorter peak wavelength and a narrower wavelength band (600 nm ± 5nm) as compared to the processing laser light L_{P} and having an output intensity of several hundreds of milliwatts (up to 1 W).

Note that the first light detector 100 is arranged in the vicinity of an optical path of the detection laser light L_{D} in the vicinity of a light emission unit of the detection laser light source 20. The second light detector 110 is arranged between the condensing lens 36 and an input end 72 of the optical fiber 70 in the vicinity of the optical paths of the processing laser light L_{P} and the detection laser light L_{D}. The third light detector 120 is arranged in the vicinity of a mode stripper unit 78 (see FIG. 2) of the optical fiber 70 in the tubular connector portion 161 provided at the first housing 160. Of these light detectors, the first light detector 100 measures the light intensity of first partial light L_{D1} of the detection laser light L_{D}, and supplies a measured signal P₁₀ to the defect determination unit 50. That is, the first light detector 100 is provided to determine whether or not the detection laser light L_{D} has reached a predetermined output.

The second light detector 110 measures the light intensity of light having deviated from a predetermined optical path from the processing laser light L_{P} and second partial light L_{D2} of the detection laser light L_{D} having transmitted through the condensing lens 36. Moreover, the second light detector 110 measures the light intensity of light reflected by the condensing lens 36 from return light having reflected by the processing target and having returned into the first housing 160 through the laser head 80 and the optical fiber 70. A signal P₁₁ measured by the second light detector 110 is supplied to the defect determination unit 50. Note that the second light detector 110 is set such that the light sensitivity of light with the same wavelength as that of the detection laser light L_{D} is higher than the light sensitivity of light with the same wavelength as that of the processing laser light L_{P}. For example, in a case where the second light detector 110 is made of a semiconductor material, the semiconductor material is properly set such that the light sensitivity can be set as described above. A band-pass filter may be arranged on a light receiving surface of the second light detector 110 or in the vicinity thereof, thereby setting the light sensitivity as described above. The second light detector 110 is mainly provided to determine whether or not dirt or stain is on the condensing lens 36 or whether or not later-described fiber burnout has occurred. Note that the third light detector 120 will be described later.

Note that the second partial light L_{D2} in the present embodiment is a light component input to the optical fiber 70 after the first partial light L_{D1} input to the first light detector 100 has been removed from the detection laser light L_{D}. For inputting the first partial light L_{D1} of the detection laser light L_{D} to the first light detector 100, another half mirror (not shown) may be arranged between the detection laser light source 20 and the half mirror 12, and using this half mirror, the detection laser light L_{D} may be divided into the first partial light L_{D1} and the second partial light L_{D2}.

The laser head 80 has a second housing 82, and the second housing 82 is equivalent to the second housing chamber 18. The second housing 82 houses a collimation lens 84, a condensing lens 86, a protection glass 88, the fourth light detector 130, and the fifth light detector 140. The fourth light detector 130 is arranged in the vicinity of the mode stripper unit 78 (see FIG. 2) of the optical fiber 70 in a tubular connector portion 821 provided at the second housing 82. The fifth light detector 140 is arranged on the side provided with the connector portion 821 in the second housing 82. The fifth light detector 140 measures the light intensity of light having deviated from a predetermined optical path from return light of the processing laser light L_{P} and the second partial light L_{D2} of the detection laser light L_{D}, the return light having reflected by the processing target and having input into the laser head 80. Moreover, the fifth light detector 140 measures the light intensity of return light of the processing laser light L_{P} and the second partial light L_{D2} of the detection laser light L_{D}, the return light having reflected by an optical component in the laser head 80, such as the protection glass 88. A signal P₁₄ measured by the fifth light detector 140 is supplied to the defect determination unit 50. The fifth light detector 140 is mainly provided to determine, e.g., the presence or absence of dirt or stain on the optical component in the laser head 80. Note that the fourth light detector 130 will be described later.

The optical fiber 70 physically and optically connects the first housing 160 and the second housing 82 to each other. The collimation lens 84 converts the processing laser light L_{P} and the second partial light L_{D2} of the detection laser light L_{D} into parallel light, and the condensing lens 86 condenses the processing laser light L_{P} and the second partial light L_{D2} of the detection laser light L_{D} having transmitted through the collimation lens 84 to the processing target. The protection glass 88 prevents, e.g., fume or sputter caused from the processing target due to irradiation with the processing laser light L_{P} from entering the second housing 82.

### [Configurations of Optical Fiber and Connection Portions thereof]

As shown in FIG. 2, end caps 76 are each provided at the input end 72 and an output end 74 of the optical fiber 70. The end cap 76 is made of columnar quartz glass. The end caps 76 are each fused and connected to the input end 72 and the output end 74 of the optical fiber 70.

The outer diameter of the end cap 76 is greater than the outer diameter of a second clad 70d of the optical fiber 70 as described later. The end caps 76 decrease the energy density of the processing laser light L_{P} at the input end 72 and the output end 74 of the optical fiber 70 so that damage of the input end 72 and the output end 74 of the optical fiber 70 can be reduced.

The output-side end portion of the optical fiber 70 is housed in the connector portion 821 provided at the second housing 82. The optical fiber 70 housed in the connector portion 821 is configured such that the mode stripper unit 78 is provided on the second clad 70d exposed by removal of part of a cover portion 70e (see FIG. 3).

The input-side end portion of the optical fiber 70 is housed in the connector portion 161, and the optical fiber 70 housed in the connector portion 161 is configured such that the mode stripper unit 78 is provided on the second clad 70d exposed by removal of part of the cover portion 70e (see FIG. 3). Note that the connector portion 161 and the connector portion 821 are each provided with not-shown water-cooling mechanisms and these mechanisms cool the optical fiber 70 housed inside.

The mode stripper unit 78 is for releasing the processing laser light L_{P} and the detection laser light L_{D} having input to the second clad 70d to the outside of the second clad 70d and removing such light. The mode stripper unit 78 is, for example, formed in such a manner that etching is performed for an outer peripheral surface of the second clad 70d.

The fourth light detector 130 measures the light intensity of light released from the mode stripper unit 78 provided on the output side of the optical fiber 70 from the processing laser light L_{P} and the second partial light L_{D2} of the detection laser light L_{D} having input to the second clad 70d or return light thereof, and supplies a measured signal P₁₃ to the defect determination unit 50.

The third light detector 120 mainly measures the light intensity of light released from the mode stripper unit 78 provided on the input side of the optical fiber 70 from the processing laser light L_{P} and the second partial light L_{D2} of the detection laser light L_{D} having input to the second clad 70d, and supplies a measured signal P₁₂ to the defect determination unit 50.

As shown in FIG. 3, the optical fiber 70 has at least first and second cores 70a, 70c as optical waveguides, a first clad 70b, and the second clad 70d, and the outer peripheral surface of the second clad 70d is covered with the light-shielding cover portion 70e.

The first core 70a is in a circular shape as viewed in section, and is arranged at the center of the optical fiber 70. The first clad 70b is arranged coaxially with the first core 70a in contact with an outer peripheral surface of the first core 70a, and is in a ring shape as viewed in section. The second core 70c is arranged coaxially with the first core 70a in contact with an outer peripheral surface of the first clad 70b, and is in a ring shape as viewed in section. The second clad 70d is arranged coaxially with the first core 70a in contact with an outer peripheral surface of the second core 70c, and is in a ring shape as viewed in section.

Any of the first core 70a, the second core 70c, the first clad 70b, and the second clad 70d is made of quartz. Note that the refractive index of the first clad 70b is set lower than the refractive index of each of the first core 70a and the second core 70c. Moreover, the refractive index of the second clad 70d is set lower than the refractive index of the second core 70c. That is, the optical fiber 70 is a so-called multi-core fiber. In a case where laser light from multiple laser light sources is combined into the processing laser light L_{P}, the beam profile of the processing laser light L_{P} is greatly expanded in some cases. Since the optical fiber 70 is the multi-core fiber, the processing laser light L_{P} can be reliably guided to the laser head 80 even in a case where the beam profile of the processing laser light L_{P} has been changed.

### [Defects of Laser Processing System and Failure Detection Device and Diagnosis of Defect Signs]

The failure detection device 1 monitors the relative ratio of each of the measurement signals P₁₀ to P₁₄ measured by the first to fifth light detectors 110, 120, 130, 140 and a temporal change in these signals. Further, the failure detection device 1 diagnoses a monitoring result by the defect determination unit 50, and determines the presence or absence and type of a sign in consideration of a defect (e.g., whether or not there is a defect in any of the laser processing system and the failure detection device 1, such as the optical fiber 70, the condensing lens 36, the laser head 80, and the processing laser light source 10, and a processing target processing state) to be caused in the laser processing system and the failure detection device 1 or laser processing and a correlation (at least based on the relative ratio of each of the light intensities measured by the second to fifth light detectors 110, 120, 130, 140 and a temporal change in these light intensities) thereamong. With this configuration, maintenance is performed for a defective location at a proper timing or the system is stopped in advance so that the quality of processing of the processing target can be maintained.

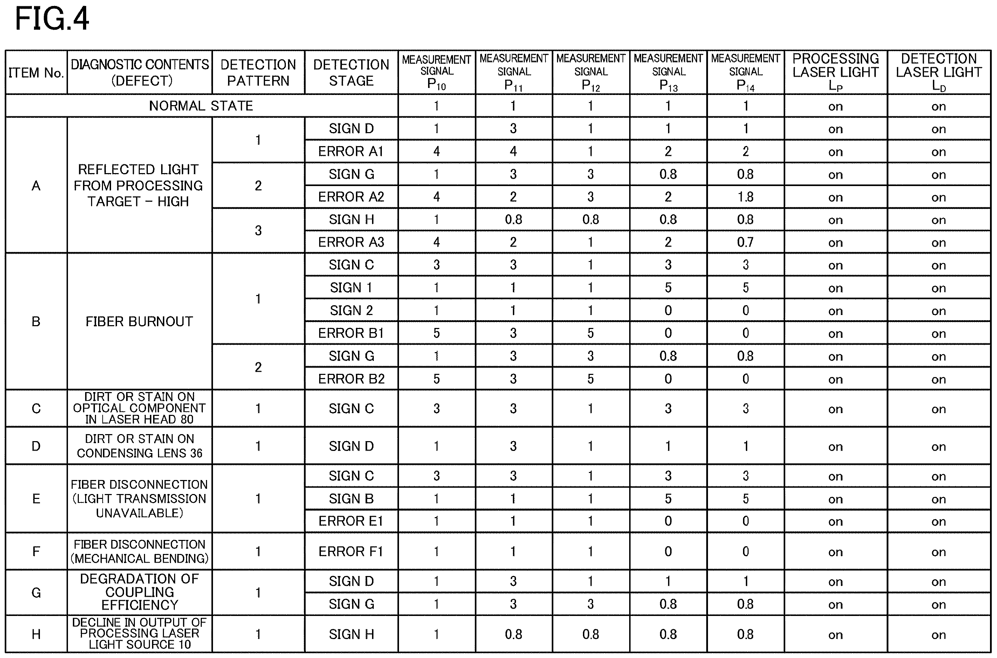

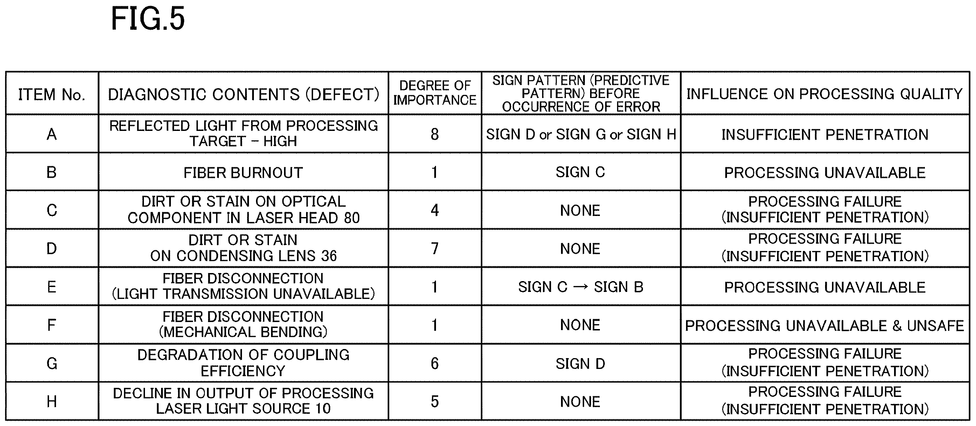

FIG. 4 is a table showing a relationship among various defects in the laser processing system and the failure detection device 1, signs of these defects, and the measurement signals from the first to fifth light detectors 100, 110, 120, 130, 140. FIG. 5 is a table showing a relationship among various defects in the laser processing system and the failure detection device 1 and the quality of processing of the processing target. Note that in the present embodiment in accordance with the present invention as defined in claim 1, e.g., various defects in the laser processing system and the failure detection device 1 and the presence or absence and type of defect in laser processing are determined and diagnosed in a on state in which the processing laser light L_{P} and the detection laser light L_{D} are simultaneously emitted from the processing laser light source 10 and the detection laser light source 20. In an example shown in FIG. 4, in a case where a diagnostic item is normal, the value of each of the measurement signals P₁₀ to P₁₄ is set to "1." In a case where there is a defect, the value of each of the measurement signals P₁₀ to P₁₄ is set to a relative value with reference to the value of the normal state.

Note that the obtained measurement signals P₁₀ to P₁₄ are saved as a history in a not-shown storage unit in association with a time elapsed from the start of laser irradiation and diagnostic items, sign patterns, and error patterns as described later. The measurement signals P₁₀ to P₁₄ may be saved in the storage unit in response to a command from the system control unit 60.

In the example shown in FIGS. 4 and 5, seven types of items are shown as the diagnostic items (hereinafter merely referred to as items) regarding the defects. Hereinafter, each item will be described. Note that in the present embodiment, an "error" means such a defect level that the laser processing system and the failure detection device 1, particularly the processing laser light source 10 and the detection laser light source 20, need to be emergently stopped in terms of safety or the quality of processing of the processing target. In a case where the defect determination unit 50 actually makes a determination as an error, the system control unit 60 stops at least the processing laser light source 10 and the detection laser light source 20. The "sign" means a defect that does not lead to stop of the laser processing system and the failure detection device 1, but might lead to an error if the defect remains unsolved. Moreover, in FIG. 4, a detection pattern number corresponds to a number subsequent to an error at a detection stage. A case where there are multiple detection patterns is a case where defects are caused due to different reasons, and errors are caused in multiple patterns. An alphabet subsequent to a sign at the detection stage corresponds to an alphabet as an item No. shown in FIG. 5 and an alphabet subsequent to a sign in a sign pattern before occurrence of an error shown in FIG. 5. In a case where a number as the value of the measurement signal continuously increases before sign detection (determination), a greater number indicates that the degree of defect is closer to a sign level. In a case where the number as the value of the measurement signal continuously increases after sign detection (determination), a greater number indicates that the degree of defect is closer to an error level. In FIG. 5, the degree of importance means influence on the laser processing system and the failure detection device 1 themselves or the degree of influence on the quality of processing of the processing target, and a smaller number indicates a greater degree of influence.

### <A: Reflected Light from Processing Target - High>

Item No. A shown in FIGS. 4 and 5 corresponds to a defect that the intensity of reflected light from the processing target is a high intensity of a predetermined value or greater. As shown in FIGS. 4 and 5, each sign (Sign D, Sign G, Sign H) for Item No. A indicates that a defect due (corresponding) to Item No. D, G, or H has been caused. For example, when the intensity of reflected light from the processing target is high, the amount of reflected light returning into the first housing 160 through the optical fiber 70 is great. When the return light is reflected by the condensing lens 36, the amount of light received by the second light detector 110 is great, and it is determined that Sign D has been caused. Such a sign pattern is a pattern corresponding to dirt or stain on the condensing lens 36. When the amount of light leaking from the mode stripper unit 78 on the input side is great, the amount of light received by the third light detector 120 is great, and it is determined that Sign G has been caused. Such a sign pattern is a pattern corresponding to degradation of the coupling efficiency of the optical fiber 70 with the processing laser light L_{P} and the detection laser light L_{D}. When the intensity of reflected light from the processing target is high and scattering on a surface of the processing target is great, the amount of light received by the fifth light detector 140 is small, and it is determined that Sign H has been caused, for example. Such a sign pattern is a pattern corresponding to a decline in the output of the processing laser light source 10.

As shown in FIG. 4, the patterns of the errors caused after detection of each sign are different from each other, but in any case, the quality of processing of the processing target is significantly degraded after the error has been caused. Thus, at the time of occurrence of the sign, the system control unit 60 displays, on a not-shown display unit, images of the sign and the pattern thereof, notifies the sign and the pattern thereof via sound, or executes both of image displaying and sound notification. With this configuration, the timing of maintenance for the failure detection device 1 and the laser processing system or a maintenance location in the failure detection device 1 and the laser processing system can be properly instructed to, e.g., a person engaging in a processing work. In a case where Sign H (a decline in the output of the processing laser light source 10) has been detected, maintenance can be performed such that an output current value of the processing laser light source 10 is adjusted to correct an output value of the processing laser light L_{P} to a set value. In this case, the system control unit 60 may have a power feedback function to automatically correct the output value of the processing laser light L_{P}.

### <B: Fiber Burnout>

Item No. B shown in FIGS. 4 and 5 corresponds to a defect that burnout has been caused in the optical fiber 70. When the amount of light passing through the first clad 70b and/or the second clad 70d without patting through the first core 70a and/or the second core 70c is great, the optical fiber 70 generates heat and burns out, and as a result, light cannot be transmitted. As shown in FIGS. 4 and 5, defects corresponding to Items No. C and G are caused as such a sign in many cases. For example, as shown as Detection Pattern 1, when dirt or stain on the optical component in the laser head 80, such as the protection glass 88 as a representative example, increases, the processing laser light L_{P} and the detection laser light L_{D} are reflected by the protection glass 88, and as return light, enters the optical fiber 70. When the intensity of such return light is high, e.g., the amount of light received by the first and second light detectors 100, 110 or the fourth and fifth light detectors 130, 140 is great, and it is determined that Sign C has been caused. Such a sign pattern is a pattern corresponding to dirt or stain on the optical component in the laser head 80. As shown as Detection Pattern 2, when, e.g., the optical axis of the processing laser light L_{P} is shifted and the amount of light passing through the clad 70b and the clad 70d of the optical fiber 70 increases, the amount of light received by the third light detector 120 is great, and the pattern (Sign G) corresponding to degradation of the coupling efficiency is detected. Note that the sign pattern is determined based on a change in a measurement signal from the normal state in a particular light detector. Thus, even if the relative values of the measurement signals P₁₀ to P₁₄ are slightly different between Sign G corresponding to Item No. A (the reflected light from the processing target - high) and Sign G corresponding to Item No. B (fiber burnout), there is no influence on sign pattern determination itself, for example. The same also applies to examples described below.

In Detection Pattern 1 for Item No. B (fiber burnout), there is a probability that the following two sign patterns are further detected until fiber burnout after detection of Sign C. First, a pattern (Sign 1) in which each of the measurement signals P₁₃, P₁₄ of the fourth and fifth light detectors 130, 140 arranged on the output side of the optical fiber 70 greatly increases is detected. Such a pattern corresponds to Sing B for Item No. E as described later. Sign 1 means that the intensity of return light reflected by the optical component in the laser head 80, such as the protection glass 88, is high. If such a state is left as it is, a sign pattern (Sign 2) is detected, which indicates a probability that burnout is caused on the output side of the optical fiber 70, the optical fiber 70 is disconnected, and the processing laser light L_{P} and the detection laser light L_{D} cannot be transmitted. Such a pattern corresponds to Errors E1 and F 1 for Items No. E and F. In this case, the fourth and fifth light detectors 130, 140 arranged on the output side of the optical fiber 70 do not receive the processing laser light L_{P} and the detection laser light L_{D}, and therefore, the measurement signals P₁₃, P₁₄ are zero. If the state detected as Sign 2 is left as it is, the optical fiber 70 burns out even on the input side due to a fiber fuse phenomenon, and an error (Error B 1 for Item No. B) is eventually detected. When fiber burnout has been caused, the processing target cannot be irradiated with the processing laser light L_{P}, and laser processing of the processing target cannot be performed. Note that the fiber fuse phenomenon means a phenomenon that optical discharge (a bright spot) caused in an optical fiber due to input of high-output laser light propagates toward a light source side while damaging the fiber.

In Detection Pattern 2 for Item No. B (fiber burnout), a case where an error (Error B2 for Item No. B (fiber burnout)) is detected after detection of Sign Pattern G (degradation of the coupling efficiency) means that a coupling loss or a transmission loss increases on the input side of the optical fiber 70, and as a result, the optical fiber 70 generates heat on the input side and burns out. As described above, according to a location or a mode that fiber burnout is caused, a temporal change in the measurement signals P₁₀ to P₁₄ and the sign or error pattern associated therewith vary. Thus, in a case where the error regarding Item No. B has been detected, the person engaging in the processing work can easily analyze a cause of the error from the history of the measurement signals P₁₀ to P₁₄. With this configuration, a maintenance or recovery work for the laser processing system and the failure detection device 1 can be promptly and properly performed, and a downtime and a maintenance cost can be reduced.

Note that according to the present embodiment, the cause of the error is easily analyzed for items other than above, needless to say. For example, for Item No. A (the reflected light from the processing target - high), multiple types of sign patterns (Sign D, Sign G, Sign H) are detected until the error is caused so that a location requiring a maintenance or confirmation work can be easily specified. For example, in a configuration in which only the first light detector 100 and the second light detector 110 are arranged in the failure detection device 1, the type of defect cannot be specified from an increase/decrease in the measurement signal P₁₁ output from the second light detector 110. This is because it cannot be determined whether an increase in the measurement signal P₁₁ is due to dirt or stain on the condensing lens 36 (Item No. D), degradation of the coupling efficiency of the optical fiber 70 (Item No. G), or an increase in the reflected light from the processing target (Item No. A), for example. Particularly, in the multi-core fiber such as the optical fiber 70 in the present embodiment, the reflected light from the processing target easily returns to the first housing 160. For this reason, it is more difficult to determine the type of defect as described above. Moreover, the output of the processing laser light L_{P} is extremely high, and fluctuation in such output is also great. In a case where a component originating from the processing laser light L_{P} has been received by the second light detector 110, saturation of the measurement signal P₁₁ is promptly caused, and for this reason, a measurement accuracy is not enhanced.

On the other hand, according to the present embodiment, e.g., the type and location of defect can be easily specified from, e.g., the relative ratio of each of the measurement signals P₁₀ to P₁₄ and a temporal change in these signals. Particularly, the light sensitivity of the second light detector 110 is set as described above, and therefore, the percentage of a component included in the measurement signal P₁₁ and originating from the detection laser light L_{D} is high. Thus, the percentage of the component originating from the detection laser light L_{D} is increased so that saturation of the measurement signal P₁₁ can be reduced and the measurement accuracy can be improved. Consequently, the downtime and the maintenance cost for the laser processing system and the failure detection device 1 can be reduced.

### <C: Dirt or stain on Optical Component in Laser Head 80>

Item No. C shown in FIGS. 4 and 5 corresponds to a defect that dirt or stain is on the optical component in the laser head 80, such as the protection glass 88. For example, it is assumed that a predetermined amount of, e.g., fume or sputter, which is caused upon irradiation of the processing target with the processing laser light L_{P}, or greater adheres to the protection glass 88. In this case, as described regarding fiber burnout as Item No. B, the amount of light received by the first and second light detectors 100, 110 or the fourth and fifth light detectors 130, 140 is great due to the influence of the reflected return light to the optical fiber 70, and Sign C (dirt or stain on the optical component in the laser head 80) is detected.

### <D: Dirt or stain on Condensing Lens 36>

Item No. D shown in FIGS. 4 and 5 corresponds to a defect that dirt or stain is on the condensing lens 36. In this case, the amount of light received by the second light detector 110 is, as described above, mainly changed and great, and Sign D is detected.

### <E, F: Fiber Disconnection>

Items No. E and F shown in FIGS. 4 and 5 correspond to defects that the optical fiber 70 is disconnected. Of these items, Item No. F corresponds to failure in mechanical bending of the optical fiber 70, and Item No. E corresponds to a state in which light transmission including bending of the optical fiber 70 cannot be performed. As shown in FIGS. 4 and 5, Error E1 for fiber disconnection (light transmission unavailable) as Item No. E corresponds to Sign 2 in Detection Pattern 1 for fiber burnout as Item No. B. Sign B for Item No. E corresponds to Sign 1 in Detection Pattern 1 for fiber burnout as Item No. B. Sign C for Item No. E corresponds to dirt or stain on the optical component in the laser head 80, i.e., Item No. C. Thus, as the sign of Error E1 corresponding to fiber disconnection (light transmission unavailable) as Item No. E, Sign B (fiber burnout) or Sign C (dirt or stain on the optical component in the laser head 80) and Sign B (fiber burnout) are caused in many cases. That is, as a stage (a sign) prior to Error E1 for Item No. E, a phenomenon is shown, in which the intensity (the measurement signals P₁₃, P₁₄) of return light reflected by the optical component in the laser head 80, such as the protection glass 88, increases over time. Note that in FIG. 4, Sign B of fiber disconnection (light transmission unavailable) as Item No. E is a pattern corresponding to Sign 1 in Detection Pattern 1 for fiber burnout as Item No. B. Error F1 for fiber disconnection (mechanical bending) as Item No. F is the same as Error E1 for fiber disconnection (light transmission unavailable) as Item No. E, but in the case of fiber disconnection (mechanical bending) as Item No. F, the error is caused without any sign in many cases. For example, such a case is a case where the optical fiber 70 is bent due to sudden contact with other objects.

Detection of Errors E1 and F 1 for Items No. E and F means that neither the processing laser light L_{P} nor the detection laser light L_{D} is emitted from the optical fiber 70 to the laser head 80, and is extremely serious. As clearly seen from FIG. 4, Errors E1 and F1 for Items No. E and F are, as Sign 2, detected in advance of the error regarding Detection Pattern 1 for fiber burnout as Item No. B. Thus, for these items, the sign pattern and a change therein need to particularly carefully checked in order to prevent fiber disconnection in advance. If disconnection has been detected, operation of the laser processing system needs to be promptly stopped in order to remove the cause of the defect.

### <G: Degradation of Coupling Efficiency>

Item No. G shown in FIGS. 4 and 5 corresponds to degradation of the coupling efficiency of the optical fiber 70 with the processing laser light L_{P} and the detection laser light L_{D}. For example, the coupling efficiency is degraded due to, e.g., position shift among the optical axes of the processing laser light L_{P} and the detection laser light L_{D} and the axis of the optical fiber 70. In this case, the processing laser light L_{P} and the detection laser light L_{D} are reflected by the input end 72 of the optical fiber 70, the amount of light received by the second light detector 110 increases, and Sign D (dirt or stain on the condensing lens 36) is detected. When such a state is left as it is, the amount of light leaking from the mode stripper unit 78 on the input side of the optical fiber 70 increases, and the measurement signal P₁₂ in the third light detector 120 becomes greater. Accordingly, the amount of light transmitted to the output side of the optical fiber 70 decreases. That is, the measurement signals P₁₃, P₁₄ in the fourth and fifth light detectors 130, 140 become smaller. Such a state is detected as Sign G (degradation of the coupling efficiency).

### <H: Decline in Output of Processing Laser Light Source 10>

Item No. H shown in FIGS. 4 and 5 corresponds to a decline in the output of the processing laser light source 10. For example, it is assumed that the output current value of the processing laser light source 10 decreases for some reasons and the light amount of the processing laser light L_{P} decreases accordingly. In this case, the measurement signal P₁₀ in the first light detector 100 that detects the first partial light L_{D1} of the detection laser light L_{D} does not change. Meanwhile, as the light amount of the processing laser light L_{P} decreases, the measurement signal in the detector positioned farther from the processing laser light source 10 becomes smaller. In the example shown in FIG. 4, the measurement signals P₁₂, P₁₃, P₁₄ in the third to fifth light detectors 120, 130, 140 become smaller, and are detected as Sign H (a decline in the output of the processing laser light source 10).

Note that the defects regarding Items No. C, D, G, and H do not promptly cause serious failure in the laser processing system and the failure detection device 1. However, as described above, there is a probability that insufficient penetration at a processing location is caused when such a state is left as it is. For this reason, at the time of detection of any of Signs C, D, G, and H, the determination result obtained by the defect determination unit 50 and the location or timing requiring maintenance are preferably notified to the person engaging in the processing work via an image, sound, or both thereof by the system control unit 60.

As described above, according to the failure detection device 1 of the present embodiment, a defect is not detected only based on a measurement signal of a single light detector at a predetermined time point, but multiple measurement signals simultaneously measured over time by multiple light detectors arranged at predetermined positions and a temporal change in these signals are monitored so that the defect determination unit 50 can multilaterally determine occurrence of a defect such as whether or not there is a defect in any of the laser processing system and the failure detection device 1, such as the optical fiber 70, the condensing lens 36, the laser head 80, and the processing laser light source 10, and the processing target processing state and a cause of such a defect.

Multiple defects are often caused in the failure detection device 1 and the laser processing system. According to the present embodiment, even if the multiple defects are caused, overlooking of these defects is reduced. Thus, a useless maintenance work and reoccurrence of an error can be prevented in advance. In a case where there are the multiple defects, e.g., the person engaging in the processing work tends to focus only on one noticeable defect. However, in this case, a sign leading to serious failure is often overlooked. On the other hand, according to the present embodiment, data can be collected and analyzed regarding occurrence of the defect in consideration of a temporal factor such as a temporal change and spatial arrangement of the failure detection device 1 and the laser processing system. Thus, occurrence of the serious failure can be prevented in advance without overlooking the sign leading to the serious failure.

The third light detector 120 measures the intensity of light released from the mode stripper unit 78 provided in the vicinity of the input end 72 of the optical fiber 70. Based on the intensity of light measured by the second light detector 110 and the third light detector 120 and a temporal change in such an intensity, the defect determination unit 50 can determine Signs D and G of degradation of the coupling efficiency of the optical fiber 70 with the processing laser light L_{P} and the detection laser light L_{D}. Specifically, as shown in FIG. 4, in a case where during operation of the laser processing system, at least one of the measurement signal P₁₁ of the second light detector 110 or the measurement signal P₁₂ of the third light detector 120 has increased as compared to the normal state (= 1), it is determined that the sign of degradation of the coupling efficiency of the optical fiber 70 with the processing laser light L_{P} and the detection laser light L_{D} has been caused.

The fourth light detector 130 measures the intensity of light released from the mode stripper unit 78 provided in the vicinity of the output end 74 of the optical fiber 70. Based on the intensity of light measured by the fourth light detector 130 and the fifth light detector 140 and a temporal change in such an intensity, the defect determination unit 50 can determine various defects in the processing system and the failure detection device 1 and the signs thereof. Particularly, both of the measurement signal P₁₃ of the fourth light detector 130 and the measurement signal P₁₄ of the fifth light detector 140 are used so that a defect due to an increase in reflected return light from the processing target and the presence or absence of a sign thereof can be reliably determined. Moreover, a defect due to dirt or stain on the optical component in the laser head 80 and the presence or absence of a sign thereof can be reliably determined. A defect due to disconnection or burnout of the optical fiber 70 and the presence or absence of a sign thereof can be reliably determined. For example, as shown in FIG. 4, in a case where each of the measurement signal P₁₃ of the fourth light detector 130 and the measurement signal P₁₄ of the fifth light detector 140 has decreased as compared to the normal state (= 1), it can be determined that Signs G and H have been caused. Particularly, in a case where each of the measurement signal P₁₃ and the measurement signal P₁₄ is not detected, it can be determined that any of disconnection (Errors E1 and F1) of the optical fiber 70, burnout (Errors B1 and B2) of the optical fiber 70, and Sign C thereof has been caused. In a case where each of the measurement signal P₁₃ and the measurement signal P₁₄ has increased as compared to the normal state (= 1), it can be determined that any of Sign C and Errors A1 and A2 has been caused. In a case where the measurement signal P₁₃ has increased as compared to the normal state (= 1) while the measurement signal P₁₄ has decreased as compared to the normal state (= 1), it is determined that Error A3 has been caused. Both of the measurement signal P₁₃ and the measurement signal P₁₄ are used so that measurement reliability can be enhanced, and therefore, the accuracy of determining the above-described defects and the signs thereof can be enhanced.

### <Variation>

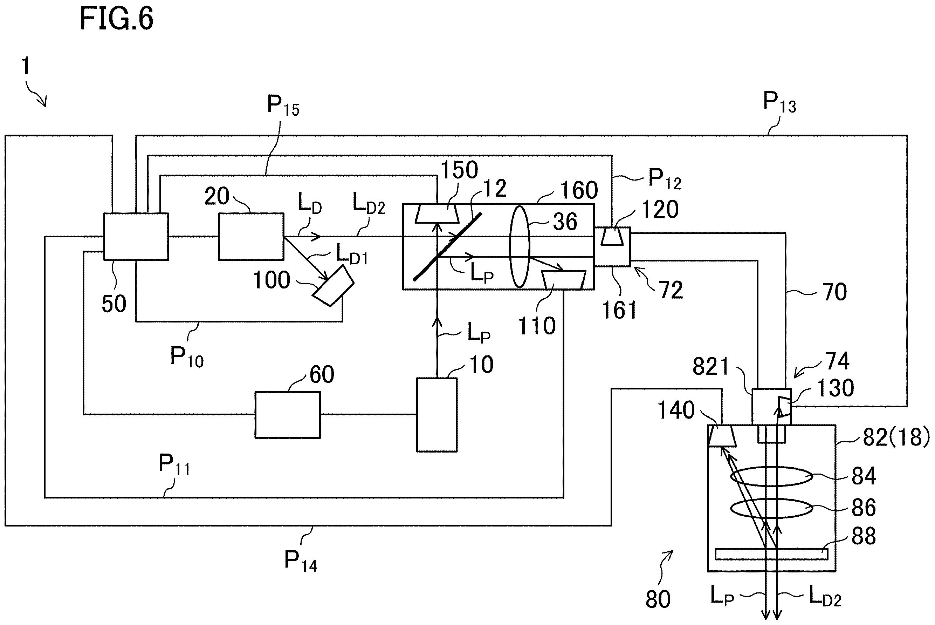

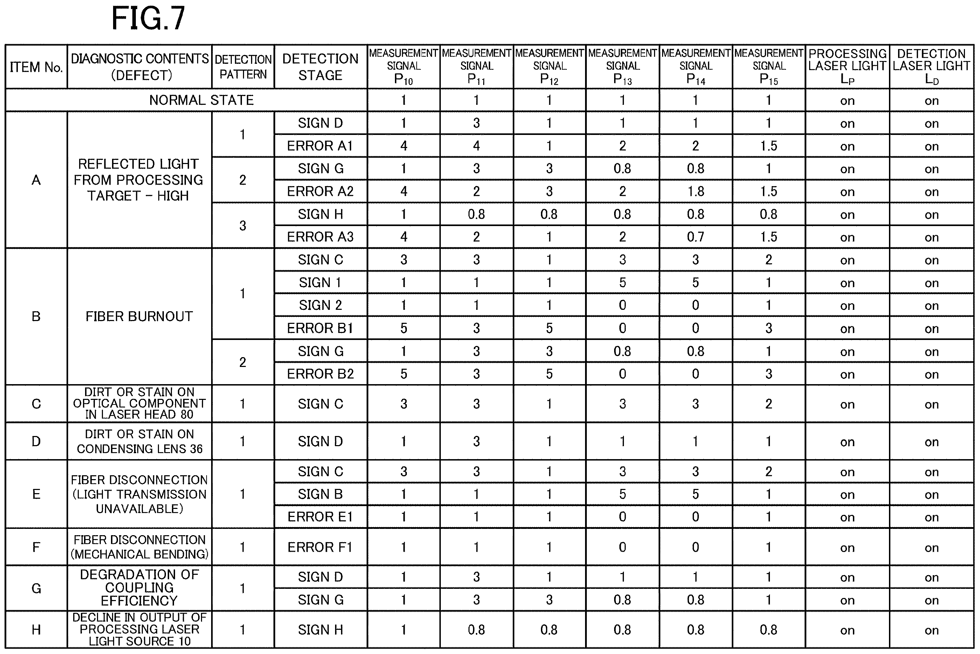

A failure detection device 1 according to the present variation will be described with reference to FIGS. 6 and 7. FIG. 6 is a block diagram showing a schematic configuration of the failure detection device 1 according to the present variation. FIG. 7 is a table showing a relationship among various defects in a laser processing system and the failure detection device 1, signs thereof, and measurement signals from first to sixth light detectors 100, 110, 120, 130, 140, 150.

The failure detection device 1 according to the present variation is different from the failure detection device 1 shown in FIG. 1 in that the sixth light detector (a sixth photoreceiver) 150 is further provided in a first housing 160. A half mirror 12 allows part of light having a wavelength band of processing laser light L_{P} to transmit therethrough. For example, the half mirror 12 allows light with about several tenths of % to several %. The sixth light detector 150 is arranged on an optical path of the processing laser light L_{P} having transmitted through the half mirror 12. That is, the sixth light detector 150 measures the intensity of partial light of the processing laser light L_{P}. Based on the measured intensity, the output of the processing laser light L_{P} is evaluated, and it is determined whether or not the output has reached a set value. In an example shown in FIG. 6, the sixth light detector 150 is arranged in the vicinity of the optical path of each of the processing laser light L_{P} and detection laser light L_{D} in the first housing 160. Thus, as shown in FIG. 7, the sixth light detector 150 can detect reflected return light from a processing target or an optical component in a laser head 80. Thus, the sixth light detector 150 can detect Errors A1 to A3 described above. Moreover, the sixth light detector 150 can detect Sign C and Errors B1 and B2 regarding burnout of an optical fiber 70.

That is, in the failure detection device 1 according to the present variation, the defect determination unit 50 determines a defect in the laser processing system and the failure detection device 1 and a sign thereof based on the relative ratio of each of light intensities measured at least by the second to sixth light detectors 110, 120, 130, 140, 150 and a temporal change in these light intensities. Preferably, the defect determination unit 50 determines a defect in the laser processing system and the failure detection device 1 based on the relative ratio of each of light intensities measured by the first to sixth light detectors 100, 110, 120, 130, 140, 150 and a temporal change in these light intensities. Based on the light intensity measured by the sixth light detector 150 and a temporal change in such a light intensity, it is determined whether or not the output of the processing laser light L_{P} has reached a predetermined output. The sixth light detector 150 is provided at the above-described position so that a change in the output of the processing laser light L_{P} can be directly detected. Moreover, the accuracy of determining Sign H described above can be improved.

Note that the detection laser light source 20 can also be utilized as a processing location teaching light source. For example, in a case where the second housing 82 of the laser head 80 is attached to a not-shown robot arm to process the processing target with laser, the processing target is irradiated with the detection laser light L_{D} as visible light so that the detection laser light L_{D} can be viewed with, e.g., a camera. Movement of the robot arm is taught such that the detection laser light L_{D} moves in a predetermined trajectory on the processing target.

### INDUSTRIAL APPLICABILITY

The present invention as defined in the appended claims can be utilized for a failure detection device in a laser processing system that transmits high-output processing laser light.

### DESCRIPTION OF REFERENCE CHARACTERS

- 1: Failure Detection Device
- 10: Processing Laser Light Source
- 12: Half Mirror
- 20: Detection Laser Light Source
- 36: Condensing Lens
- 50: Defect Determination Unit (Determination Unit)
- 60: System Control Unit
- 70: Optical Fiber
- 72: Input End
- 74: Output End
- 78: Mode Stripper Unit
- 80: Laser Head
- 82: Second Housing
- 821: Connector Portion
- 84: Collimation Lens
- 86: Condensing Lens
- 88: Protection Glass
- 100: First Light Detector (Photoreceiver)
- 110: Second Light Detector (Photoreceiver)
- 120: Third Light Detector (Photoreceiver)
- 130: Fourth Light Detector (Photoreceiver)
- 140: Fifth Light Detector (Photoreceiver)
- 150: Sixth Light Detector (Photoreceiver)
- 160: First Housing
- 161: Connector Portion
- L_{P}: Processing Laser Light
- L_{D}: Detection Laser Light
- L_{D1}: First Partial Light
- L_{D2}: Second Partial Light

## Claims

1. A failure detection device (1) comprising:
a processing laser light source (10) that emits processing laser light;
a detection laser light source (20) that emits detection laser light;
an optical fiber (70) that transmits second partial light of the detection laser light and the processing laser light;
a condensing lens (36) that condenses the second partial light and the processing laser light to the input end (72) of the optical fiber (70);
the failure detection device (1) being **characterised by** the following:
the optical fiber (70) being provided with a mode stripper unit (78) in a vicinity of an input end (72) and another mode stripper unit (78) in a vicinity of an output end (74);
a second photoreceiver (110) that is arranged in a vicinity of the condensing lens (36), for measuring the light intensity of light having deviated from a predetermined optical path from the processing laser light and second partial light of the detection laser light having transmitted through the condensing lens (36);
a third photoreceiver (120) that is arranged in a vicinity of the mode stripper unit (78) provided on the input side of the optical fiber (70), for measuring an intensity of light released from the mode stripper unit (78) from the processing laser light and the second partial light of the detection laser light having input to a second clad (70d) of the optical fiber (70);
a fourth photoreceiver (130) that is arranged in a vicinity of the another mode stripper unit (78), for measuring the light intensity of light released from the other mode stripper unit (78) from the processing laser light L and the second partial light of the detection laser light having input to a second clad 70d of the optical fiber (70) or return light thereof;
a laser head (80) that is connected to the output end (74) of the optical fiber (70) and emits the second partial light and the processing laser light to a processing target;
a fifth photoreceiver (140) that is arranged in the laser head (80), for measuring the light intensity of light having deviated from a predetermined optical path from return light of the processing laser light and the second partial light of the detection laser light, the return light having reflected by the processing target and having input into the laser head (80); and
a determination unit (50), wherein the determination unit is configured to,
in a on state in which the processing laser light and the detection laser light are emitted from the processing laser light source (10) and the detection laser light source (20) simultaneously respectively;
and the processing laser light and the detection laser light are transmitted to the laser head (80) through the optical fiber (70), determine, based on a relative ratio of each of the light intensities measured at least by the second to fifth photoreceivers (110, 120, 130, 140) and a temporal change in the light intensities, whether or not there is a defect in any of the optical fiber (70), the condensing lens (36), the laser head (80), and a processing target processing state, and determines a type of defect if there is a defect.

2. The failure detection device (1) of claim 1, wherein
the determination unit (50) determines a sign of the defect based on the relative ratio of each of the light intensities measured at least by the second to fifth photoreceivers (110, 120, 130, 140) and the temporal change in the light intensities.

3. The failure detection device (1) of claim 1 or 2, wherein
the optical fiber (70) has, at a center thereof, a first core as a waveguide, and a second core as a ring-shaped waveguide as viewed in section is provided coaxially with the first core and is provided with a predetermined space from the first core on an outer peripheral side of the first core.

4. The failure detection device (1) of any one of claims 1 to 3, further comprising:
a first photoreceiver (100) that measures an intensity of a first partial light of the detection laser light,
wherein the determination unit (50) determines the defect and the sign of the defect based on the relative ratio of each of the light intensities measured by the first to fifth photoreceivers (100, 110, 120, 130, 140) and the temporal change in the light intensities, and
based on the light intensity measured by the first photoreceiver (100) and the temporal change in the light intensity, further determines whether or not an output of the detection laser light has reached a predetermined output.

5. The failure detection device (1) of claim 4, wherein
the second photoreceiver (110) is set such that a light sensitivity of light with a wavelength identical to that of the detection laser light is higher than a light sensitivity of light with a wavelength identical to that of the processing laser light.

6. The failure detection device (1) of any one of claims 1 to 5, wherein
based on the light intensities measured by the second photoreceiver (110) and the third photoreceiver (120) and the temporal change in the light intensities, a sign of degradation of a coupling efficiency of the optical fiber (70) with the processing laser light and the detection laser light is determined.

7. The failure detection device (1) of any one of claims 1 to 6, wherein
based on the light intensities measured by the fourth photoreceiver (130) and the fifth photoreceiver (140) and the temporal change in the light intensities, a defect due to an increase in reflected return light from the processing target, dirt or stain on an optical component in the laser head (80), or burnout or disconnection of the optical fiber (70) and a sign of the defect are determined.

8. The failure detection device (8) of any one of claims 1 to 7, further comprising:
a sixth photoreceiver (150) that measures an intensity of partial light of the processing laser light,
wherein the determination unit (50) determines the defect and the sign of the defect based on the relative ratio of each of the light intensities measured at least by the second to fifth photoreceivers (110, 120, 130, 140) and the temporal change in the light intensities, and
based on the light intensity measured by the sixth photoreceiver (150) and the temporal change in the light intensity, further determines whether or not an output of the processing laser light has reached a predetermined output.

9. The failure detection device (1) of any one of claims 1 to 8, wherein
the light intensities are measured at least by the second to fifth photoreceivers (110, 120, 130, 140) in a state in which the processing laser light and the detection laser light are simultaneously emitted, and
the determination unit (50) determines the defect and a presence or absence of the sign of the defect based on the relative ratio of each of the measured light intensities and the temporal change in the measured-light intensities.

10. A laser processing system comprising:
the failure detection device (1) of any one of claims 1 to 9; and
a control unit (60) that controls the failure detection device (1).

11. The laser processing system of claim 10, wherein
in a case where the determination unit (50) has determined that there is the defect in any of the optical fiber (70) and the processing target processing state,
the control unit (60) stops at least the processing laser light source (10) and the detection laser light source (20) of the failure detection device (1).

12. The laser processing system of claim 10 or 11, wherein
in a case where the determination unit (50) has determined that the sign of the defect is caused in any of the optical fiber (70), the condensing lens (36), the laser head (80), and the processing target processing state,
the control unit (60) notifies a determination result obtained by the determination unit (50), saves the determination result in a storage unit, or executes both determination result notification and saving.

13. The laser processing system of claim 12, wherein
based on the determination result obtained by the determination unit (50), the control unit (60) corrects the output of the processing laser light, notifies a maintenance location and a maintenance timing, or executes both correction and notification.

## Patentansprüche

1. Ausfalldetektionsvorrichtung (1), die Folgendes umfasst:
eine Verarbeitungslaserlichtquelle (10), die Verarbeitungslaserlicht emittiert;
eine Detektionslaserlichtquelle (20), die Detektionslaserlicht emittiert;
einen Lichtwellenleiter (70), der ein zweites Teillicht des Detektionslaserlichts und des Verarbeitungslaserlichts überträgt;
eine Kondensorlinse (36), die das zweite Teillicht und das Verarbeitungslaserlicht zum Eintrittsende (72) des Lichtwellenleiters (70) kondensiert;
wobei die Ausfalldetektionsvorrichtung (1) durch Folgendes gekennzeichnet ist:
den Lichtwellenleiter (70), der mit einer Modenabstreifereinheit (78) in einer Nähe eines Eintrittsendes (72) und einer weiteren Modenabstreifereinheit (78) in einer Nähe eines Austrittsendes (74) versehen ist;
einen zweiten Photoempfänger (110), der in einer Nähe der Kondensorlinse (36) angeordnet ist, zum Messen der Lichtstärke von Licht, das aus einem vorbestimmten optischen Pfad vom Verarbeitungslaserlicht abgewichen ist, und von einem zweiten Teillicht des Detektionslaserlichts, das durch die Kondensorlinse (36) übertragen wurde;
einen dritten Photoempfänger (120), der in einer Nähe der Modenabstreifereinheit (78) angeordnet ist, die auf der Eintrittsseite des Lichtwellenleiters (70) bereitgestellt ist, zum Messen einer Stärke von Licht, das aus der Modenabstreifereinheit (78) vom Verarbeitungslaserlicht ausgegeben wird, und vom zweiten Teillicht des Detektionslaserlichts, das in einen zweiten Mantel (70d) des Lichtwellenleiters (70) eingegeben wurde;
einen vierten Photoempfänger (130), der in einer Nähe einer weiteren Modenabstreifereinheit (78) angeordnet ist, zum Messen der Lichtstärke von Licht, das aus der weiteren Modenabstreifereinheit (78) vom Verarbeitungslaserlicht L ausgegeben wird, und vom zweiten Teillicht des Detektionslaserlichts, das in einen zweiten Mantel 70d des Lichtwellenleiters (70) eingegeben wurde, oder von einem Rücklicht davon;
einen Laserkopf (80), der mit dem Austrittsende (74) des Lichtwellenleiters (70) verbunden ist und das zweite Teillicht und das Verarbeitungslaserlicht zu einem Verarbeitungsziel emittiert;
einen fünften Photoempfänger (140), der im Laserkopf (80) angeordnet ist, zum Messen der Lichtstärke von Licht, das von einem vorbestimmten optischen Pfad vom Rücklicht des Verarbeitungslaserlichts abgewichen ist, und vom zweiten Teillicht des Detektionslaserlichts, wobei das Rücklicht vom Verarbeitungsziel reflektiert und in den Laserkopf (80) eingegeben wurde; und
eine Bestimmungseinheit (50), wobei die Bestimmungseinheit in einem eingeschalteten Zustand, in dem das Verarbeitungslaserlicht und das Detektionslaserlicht von der Verarbeitungslaserlichtquelle (10) bzw. von der Detektionslaserlichtquelle (20) gleichzeitig emittiert werden und das Verarbeitungslaserlicht und das Detektionslaserlicht durch den Lichtwellenleiter (70) zum Laserkopf (80) übertragen werden, zu Folgendem ausgelegt ist,
Bestimmen auf Basis eines relativen Verhältnisses von jeder der Lichtstärken, die mindestens vom zweiten bis zum fünften Photoempfänger (110, 120, 130, 140) gemessen wurden, und einer zeitlichen Änderung der Lichtstärken, ob in einem des Lichtwellenleiters (70), der Kondensorlinse (36), dem Laserkopf (80) und einem Verarbeitungszielverarbeitungszustand ein Defekt vorhanden ist oder nicht und wenn ein Defekt vorhanden ist, Bestimmen eine Art von Defekt.

2. Ausfalldetektionsvorrichtung (1) nach Anspruch 1, wobei
die Bestimmungseinheit (50) ein Anzeichen des Defekts auf Basis des relativen Verhältnisses von jeder der Lichtstärken, die mindestens vom zweiten bis zum fünften Photoempfänger (110, 120, 130, 140) gemessen wurden, und der zeitlichen Änderung der Lichtstärken bestimmt.

3. Ausfalldetektionsvorrichtung (1) nach Anspruch 1 oder 2, wobei
ein Lichtwellenleiter (70) in einer Mitte davon einen ersten Kern als einen Wellenleiter aufweist und ein zweiter Kern als ein im Querschnitt gesehen ringförmiger Wellenleiter koaxial zum ersten Kern bereitgestellt ist und mit einem vorbestimmten Abstand vom ersten Kern auf einer Außenperipherieseite des ersten Kerns versehen ist.

4. Ausfalldetektionsvorrichtung (1) nach einem der Ansprüche 1 bis 3, die ferner Folgendes umfasst:
einen ersten Photoempfänger (100), der eine Stärke eines ersten Teillichts des Detektionslaserlichts misst,
wobei die Bestimmungseinheit (50) den Defekt und das Anzeichen des Defekts auf Basis des relativen Verhältnisses von jeder der Lichtstärken, die vom ersten bis zum fünften Photoempfänger (100, 110, 120, 130, 140) gemessen wurden, und der zeitlichen Änderung der Lichtstärken bestimmt, und
auf Basis der Lichtstärke, die vom ersten Photoempfänger (100) gemessen wurde, und einer zeitlichen Änderung der Lichtstärke ferner bestimmt, ob eine Ausgabe des Detektionslaserlichts eine vorbestimmte Ausgabe erreicht hat oder nicht.

5. Ausfalldetektionsvorrichtung (1) nach Anspruch 4, wobei
der zweite Photoempfänger (110) derart eingestellt ist, dass eine Lichtempfindlichkeit von Licht mit einer Wellenlänge, die mit der des Detektionslaserlichts identisch ist, höher ist als eine Lichtempfindlichkeit von Licht mit einer Wellenlänge, die mit dem des Verarbeitungslaserlichts identisch ist.

6. Ausfalldetektionsvorrichtung (1) nach einem der Ansprüche 1 bis 5, wobei
auf Basis der Lichtstärken, die vom zweiten Photoempfänger (110) und vom dritten Photoempfänger (120) gemessen wurden, und der zeitlichen Änderung der Lichtstärken ein Anzeichen einer Verschlechterung einer Kopplungseffizienz des Lichtwellenleiters (70) mit dem Verarbeitungslaserlicht und dem Detektionslaserlicht bestimmt wird.

7. Ausfalldetektionsvorrichtung (1) nach einem der Ansprüche 1 bis 6, wobei
auf Basis der Lichtstärken, die vom vierten Photoempfänger (130) und vom fünften Photoempfänger (140) gemessen wurden, und der zeitlichen Änderung der Lichtstärken, ein Defekt infolge einer Erhöhung von reflektiertem Rücklicht vom Verarbeitungsziel, von Schmutz oder von Flecken auf einer optischen Komponente im Laserkopf (80) oder einem Ausbrand oder einer Trennung des Lichtwellenleiters (70) sowie ein Anzeichen des Defekts bestimmt werden.

8. Ausfalldetektionsvorrichtung (1) nach einem der Ansprüche 1 bis 7, die ferner Folgendes umfasst:
einen sechsten Photoempfänger (150), der eine Stärke von Teillicht des Verarbeitungslaserlichts misst,
wobei die Bestimmungseinheit (50) den Defekt und das Anzeichen des Defekts auf Basis des relativen Verhältnisses von jeder der Lichtstärken, die mindestens vom zweiten bis zum fünften Photoempfänger (110, 120, 130, 140) gemessen wurden, und der zeitlichen Änderung der Lichtstärken bestimmt, und
auf Basis der Lichtstärke, die vom sechsten Photoempfänger (150) gemessen wurde, und einer zeitlichen Änderung der Lichtstärke ferner bestimmt, ob eine Ausgabe des Verarbeitungslaserlichts eine vorbestimmte Ausgabe erreicht hat oder nicht.

9. Ausfalldetektionsvorrichtung (1) nach einem der Ansprüche 1 bis 8, wobei
in einem Zustand, in dem das Verarbeitungslaserlicht und das Detektionslaserlicht gleichzeitig emittiert werden, die Lichtstärken mindestens vom zweiten bis zum fünften Photoempfänger (110, 120, 130, 140) gemessen werden, und
die Bestimmungseinheit (50) den Defekt und ein Vorhandensein oder ein Fehlen des Anzeichens des Defekts auf Basis des relativen Verhältnisses von jeder der gemessenen Lichtstärken und der zeitlichen Änderung der gemessenen Lichtstärken bestimmt.

10. Laserverarbeitungssystem, das Folgendes umfasst:
die Ausfalldetektionsvorrichtung (1) nach einem der Ansprüche 1 bis 9; und
eine Steuereinheit (60), die die Ausfalldetektionsvorrichtung (1) steuert.

11. Laserverarbeitungssystem nach Anspruch 10, wobei
in einem Fall, in dem die Bestimmungseinheit (50) bestimmt hat, dass in einem des Lichtwellenleiters (70) und dem Verarbeitungszielverarbeitungszustand ein Defekt vorhanden ist,
die Steuereinheit (60) mindestens die Verarbeitungslaserlichtquelle (10) und die Detektionslaserlichtquelle (20) der Ausfalldetektionsvorrichtung (1) stoppt.

12. Laserverarbeitungssystem nach Anspruch 10 oder 11, wobei
in einem Fall, in dem die Bestimmungseinheit (50) bestimmt hat, dass das Anzeichen des Defekts in einem des Lichtwellenleiters (70), der Kondensorlinse (36), des Laserkopfes (80) und des Verarbeitungszielverarbeitungszustandes verursacht wird,
die Steuereinheit (60) ein von der Bestimmungseinheit (50) erhaltenes Bestimmungsergebnis meldet, das Bestimmungsergebnis in einer Speichereinheit speichert oder sowohl die Meldung des Bestimmungsergebnisses als auch das Speichern ausführt.

13. Laserverarbeitungssystem nach Anspruch 12, wobei
auf Basis des von der Bestimmungseinheit (50) erhaltenen Bestimmungsergebnisses die Steuereinheit (60) die Ausgabe des Verarbeitungslaserlichts korrigiert, einen Wartungsort und einen Wartungszeitpunkt meldet oder sowohl die Korrektur als auch die Meldung ausführt.

## Revendications

1. Dispositif de détection de défaillance (1) comprenant :
une source de lumière laser de traitement (10) qui émet une lumière laser de traitement ;
une source de lumière laser de détection (20) qui émet une lumière laser de détection ;
une fibre optique (70) qui transmet une deuxième lumière partielle de la lumière laser de détection et la lumière laser de traitement ;
une lentille de condensation (36) qui condense la deuxième lumière partielle et la lumière laser de traitement dans l'extrémité d'entrée (72) de la fibre optique (70) ;
le dispositif de détection de défaillance (1) étant **caractérisé en ce que** :
la fibre optique (70) est pourvue d'une unité de suppresseur de mode (78) à proximité d'une extrémité d'entrée (72) et d'une autre unité de suppresseur de mode (78) à proximité d'une extrémité de sortie (74) ;
un deuxième photorécepteur (110) qui est agencé à proximité de la lentille de condensation (36), pour mesurer l'intensité lumineuse de la lumière qui a dévié d'un chemin optique prédéterminé provenant de la lumière laser de traitement et de la deuxième lumière partielle de la lumière laser de détection ayant traversé la lentille de condensation (36) ;
un troisième photorécepteur (120) qui est agencé à proximité de l'unité de suppresseur de mode (78) prévue sur le côté d'entrée de la fibre optique (70), pour mesurer l'intensité de la lumière libérée par l'unité de suppresseur de mode (78) provenant de la lumière laser de traitement et de la deuxième lumière partielle de la lumière laser de détection ayant pénétré dans une deuxième gaine (70d) de la fibre optique (70) ;
une quatrième photorécepteur (130) qui est agencé à proximité de l'autre unité de suppresseur de mode (78), pour mesurer l'intensité lumineuse de la lumière libérée par l'autre unité de suppresseur de mode (78) provenant de la lumière laser de traitement et de la deuxième lumière partielle de la lumière laser de détection ayant pénétré dans une deuxième gaine (70d) de la fibre optique (70), ou d'une lumière de retour de celles-ci ;
une tête laser (80) qui est connectée à l'extrémité de sortie (74) de la fibre optique (70) et qui émet la deuxième lumière partielle et la lumière laser de traitement vers une cible de traitement ;
un cinquième photorécepteur (140) qui est agencé dans la tête laser (80), pour mesurer l'intensité lumineuse de la lumière qui a dévié d'un chemin optique prédéterminé provenant de la lumière de retour de la lumière laser de traitement et de la deuxième lumière partielle de la lumière laser de détection, la lumière de retour étant réfléchie par la cible de traitement et ayant pénétré dans la tête laser (80) ; et
une unité de détermination (50), dans lequel l'unité de détermination est configurée pour, dans un état de marche où la lumière laser de traitement et la lumière laser de détection sont émises simultanément par la source de lumière laser de traitement (10) et la source de lumière laser de détection (20) respectivement ; et où la lumière laser de traitement et la lumière laser de détection sont transmises à la tête laser (80) à travers la fibre optique (70),
sur la base d'un rapport relatif de chacune des intensités lumineuses mesurées au moins par les deuxième à cinquième photorécepteurs (110, 120, 130, 140) et d'une variation temporelle des intensités lumineuses, déterminer s'il y a ou non un défaut dans l'un quelconque parmi la fibre optique (70), la lentille de condensation (36), la tête laser (80) et un état de traitement de cible de traitement, et déterminer un type de défaut s'il y a un défaut.

2. Dispositif de détection de défaillance (1) selon la revendication 1, dans lequel
l'unité de détermination (50) détermine un signe du défaut sur la base du rapport relatif de chacune des intensités lumineuses mesurées au moins par les deuxième à cinquième photorécepteurs (110, 120, 130, 140) et de la variation temporelle des intensités lumineuses.

3. Dispositif de détection de défaillance (1) selon la revendication 1 ou 2, dans lequel
en son centre, la fibre optique (70) dispose d'un premier coeur comme guide d'ondes, et un deuxième coeur comme guide d'ondes en forme d'anneau vu en coupe est prévu sur le même axe que le premier coeur et est prévu à un espace prédéterminé du premier coeur sur un côté périphérique extérieur du premier coeur.

4. Dispositif de détection de défaillance (1) selon l'une des revendications 1 à 3, comprenant en outre :
un premier photorécepteur (100) qui mesure l'intensité d'une première lumière partielle de la lumière laser de détection,
dans lequel l'unité de détermination (50) détermine le défaut et le signe du défaut sur la base du rapport relatif de chacune des intensités lumineuses mesurées par les premier au cinquième photorécepteurs (100, 110, 120, 130, 140), et de la variation temporelle des intensités lumineuses, et
sur la base de l'intensité lumineuse mesurée par le premier photorécepteur (100) et de la variation temporelle de l'intensité lumineuse, détermine en outre si une sortie de la lumière laser de détection a atteint ou non une sortie prédéterminée.

5. Dispositif de détection de défaillance (1) selon la revendication 4, dans lequel
le deuxième photorécepteur (110) est réglé de manière à ce qu'une sensibilité à la lumière de la lumière d'une longueur d'onde identique à celle de la lumière laser de détection soit supérieure à une sensibilité à la lumière de la lumière d'une longueur d'onde identique à celle de la lumière laser de traitement.

6. Dispositif de détection de défaillance (1) selon l'une des revendications 1 à 5, dans lequel
sur la base des intensités lumineuses mesurées par le deuxième photorécepteur (110) et le troisième photorécepteur (120) et de la variation temporelle des intensités lumineuses, un signe de dégradation d'une efficacité de couplage de la fibre optique (70) avec la lumière laser de traitement et la lumière laser de détection est déterminé.

7. Dispositif de détection de défaillance (1) selon l'une des revendications 1 à 6, dans lequel
sur la base des intensités lumineuses mesurées par le quatrième photorécepteur (130) et le cinquième photorécepteur (140) et de la variation temporelle des intensités lumineuses, un défaut dû à une augmentation de la lumière de retour réfléchie par la cible de traitement, de la saleté ou une tache sur un composant optique dans la tête laser (80), ou dû à une fibre optique (70) grillée ou déconnectée, et un signe du défaut sont déterminés.

8. Dispositif de détection de défaillance (1) selon l'une des revendications 1 à 7, comprenant en outre :
un sixième photorécepteur (150) qui mesure l'intensité de la lumière partielle de la lumière laser de traitement,
dans lequel l'unité de détermination (50) détermine le défaut et le signe du défaut sur la base du rapport relatif de chacune des intensités lumineuses mesurées au moins par les deuxième à cinquième photorécepteurs (110, 120, 130, 140) et de la variation temporelle des intensités lumineuses, et
sur la base de l'intensité lumineuse mesurée par le sixième photorécepteur (150) et de la variation temporelle dans l'intensité lumineuse, détermine en outre si une sortie de la lumière laser de traitement a atteint ou non une sortie prédéterminée.

9. Dispositif de détection de défaillance (1) selon l'une des revendications 1 à 8, dans lequel
les intensités lumineuses sont mesurées au moins par les deuxième à cinquième photorécepteurs (110, 120, 130, 140) dans un état où la lumière laser de traitement et la lumière laser de détection sont émises simultanément, et
l'unité de détermination (50) détermine le défaut et la présence ou l'absence du signe du défaut sur la base du rapport relatif de chacune des intensités lumineuses mesurées et de la variation temporelle des intensités lumineuses mesurées.

10. Système de traitement laser comprenant :
le dispositif de détection de défaillance (1) selon l'une des revendications 1 à 9 ; et
une unité de commande (60) qui commande le dispositif de détection de défaillance (1).

11. Système de traitement laser selon la revendication 10, dans lequel
dans le cas où l'unité de détermination (50) a déterminé qu'il y a un défaut dans l'un quelconque parmi la fibre optique (70) et l'état de traitement de cible de traitement,
l'unité de commande (60) arrête au moins la source de lumière laser de traitement (10) et la source de lumière laser de détection (20) du dispositif de détection de défaillance (1).

12. Système de traitement laser selon la revendication 10 ou 11, dans lequel
dans le cas où l'unité de détermination (50) a déterminé que le signe du défaut est causé dans l'un quelconque parmi la fibre optique (70), la lentille de condensation (36), la tête laser (80) et l'état de traitement de cible de traitement,
l'unité de commande (60) notifie un résultat de détermination obtenu par l'unité de détermination (50), sauvegarde le résultat de détermination dans une unité de stockage, ou exécute à la fois la notification de résultat de détermination et la sauvegarde.

13. Système de traitement laser selon la revendication 12, dans lequel
sur la base du résultat de détermination obtenu par l'unité de détermination (50), l'unité de commande (60) corrige la sortie de la lumière laser de traitement, notifie un emplacement et un calendrier de maintenance, ou exécute à la fois la correction et la notification.
